# EUROPEAN PATENT APPLICATION

(11) **EP 4 691 900 A2**
(43) Date of publication of application: **11.02.2026**
(21) Application number: 24785265.0
(22) Date of filing: 04.04.2024
(51) Int. Cl.: B63B 25/16, B63B 73/43, F17C 3/08, F17C 3/02

(54) **VACUUM INSULATED LIQUERFIED GAS STORAGE TANK AND SHIP COMPRISING SAME**

(30) Priority: 04.04.2023 KR 20230044271
(71) Applicant: HD Korea Shipbuilding & Offshore Engineering Co., Ltd., Seongnam-si, Gyeonggi-do 13553 (KR)
(72) Inventor: JANG, Heung Woon, Seongnam-si Gyeonggi-do 13553 (KR); HAN, Sung Kon, Seongnam-si Gyeonggi-do 13553 (KR); KIM, Eon, Seongnam-si Gyeonggi-do 13553 (KR); LEE, Ji Hoon, Seongnam-si Gyeonggi-do 13553 (KR); SHIN, Dong Kyu, Seongnam-si Gyeonggi-do 13553 (KR); CHOI, Byoung Il, Seongnam-si Gyeonggi-do 13553 (KR); LEE, Won Ho, Seongnam-si Gyeonggi-do 13553 (KR)
(74) Representative: Beck Greener LLP
(86) International application number: PCT/KR2024/004427
(87) International publication number: WO 2024/210565

(57) **Abstract**

The present disclosure relates to a vacuum insulated liquefied gas storage tank, comprising: an inner tank in which liquefied gas is stored; an outer tank which surrounds the inner tank; a vacuum insulation part which is formed between the outer tank and the inner tank and is filled with an insulating material to block heat transfer; and a vacuum pipe which is disposed within the vacuum insulation part and has an intake port formed, wherein the intake port may be formed in a plural number along the lengthwise direction of the vacuum pipe.

## Description

### [Technical Field]

The present invention relates to a vacuum insulated liquefied gas storage tank and a ship comprising the same.

### [Background Art]

Generally, liquefied gas is transported in a gaseous state through onshore or offshore gas pipes, or stored and transported in a liquefied gas state using a storage tank. Cooling the liquefied gas to cryogenic temperature significantly reduces its volume compared to its gaseous state, thereby improving the efficiency of storage and long-distance transport.

When external heat is transferred to the liquefied gas, the liquefied gas may vaporize, increasing the pressure within the storage tank or causing the loss of liquefied gas. Therefore, to safely and efficiently store the liquefied gas, the storage tank should have sufficient rigidity to withstand the cryogenic temperature and have high insulation properties to block external heat transfer.

In particular, liquefied hydrogen (LH2), which has been in the spotlight recently as an alternative energy source, has a liquefaction temperature of approximately -253°C, lower than a liquefaction temperature (approximately -162°C) of liquefied natural gas (LNG) that is a representative liquefied gas. Due to its low boiling point characteristics, LH2 vaporizes very easily, and its boil-off rate (BOR) per volume is 10 times higher than that of the LNG. Therefore, a storage tank, in which liquefied hydrogen is stored, requires superior insulation performance compared to a storage tank in which the liquefied natural gas is stored.

The storage tank may be equipped with a vacuum insulation part between inner and outer tanks to enhance insulation property, and a vacuum insulated storage tank is primarily selected as the storage tank. In particular, the vacuum insulated storage tank is primarily used in a small LNG storage tank with a high surface area-to-volume ratio or in a liquefied hydrogen storage tank that requires a high level of insulation.

The vacuum insulated storage tank consists of an inner tank in which liquefied gas is directly stored, an outer tank that completely surrounds the inner tank and is vacuum-insulated, a vacuum insulation part that is formed between the inner and outer tanks, and a support structure that connects the inner and outer tanks to maintain the vacuum insulation part and firmly support and fix the inner tank to the outer tank.

The vacuum insulation part may be filled with powder-form insulating materials, such as expanded perlite power or hollow glass microspheres. The vacuum insulation part may enhance insulation performance through the process of creating a vacuum in a space between the insulating materials while being filled with the insulating material.

However, creating a vacuum in the space between the insulating materials while the insulating material is filled may hinder smooth discharge in locations far from a vacuum pump that creates the vacuum. As a result, the time and labor required to create the vacuum in the vacuum insulation part may increase. As the size of the storage tank increases, the time and labor required to create the vacuum in the vacuum insulation part may increase.

Therefore, technological development is needed to reduce the time and labor required to create the vacuum in the vacuum insulation part of the liquefied gas storage tank.

### [Disclosure]

### [Technical Problem]

The present invention was created to solve the above-described problems of the prior art. The object of the present invention is to reduce the time and labor required to create a vacuum in a vacuum insulation part of a liquefied gas storage tank by providing a plurality of vacuum pipes therein.

The problems of the present invention are not limited to the above-described problems, and other problems not described may be obviously understood by those skilled in the art from the following description.

### [Technical Solution]

A vacuum insulated liquefied gas storage tank according to the present invention includes: an inner tank in which liquefied gas is stored; an outer tank which is spaced apart from the inner tank and surrounds the inner tank; a vacuum insulation part which is formed between the outer tank and the inner tank and is filled with an insulating material to block heat transfer between the outer tank and the inner tank; and a vacuum pipe which is disposed within the vacuum insulation part and has an intake port formed on a side surface thereof, wherein the intake port may be formed in a plural number along a lengthwise direction of the vacuum pipe.

Specifically, the vacuum pipe may suck gas between the insulating materials filled in the vacuum insulation part into the vacuum pipe through the intake port.

Specifically, the vacuum insulated liquefied gas storage tank may further include a filter unit which covers the intake port to prevent the insulating material from being discharged to an outside.

Specifically, the vacuum pipe may be fixed to the outer tank and surround the inner tank.

Specifically, the vacuum pipe may be fixed at a position spaced apart from a central weld line formed by welding a structure constituting the outer tank or the inner tank.

Specifically, at least two of the vacuum pipes may be provided in the vacuum insulation part.

Specifically, the insulating material may include at least one of polypropylene, polyurethane, polystyrene, polyethylene, polyisocyanurate, aerogel blanket, fumed silica, calcium silicate, mineral wool, glass wool, glass microfiber, perlite, and glass bubbles.

Specifically, the vacuum insulated liquefied gas storage tank may further include a connection part which fixes the vacuum pipe to the outer tank.

Specifically, the connection part may be installed to be spaced apart from a central weld line formed by welding a structure constituting the outer tank or the inner tank.

Specifically, the vacuum insulated liquefied gas storage tank may further include a support structure that is provided between the inner tank and the outer tank to fix the inner tank to the outer tank.

Specifically, the vacuum insulated liquefied gas storage tank may be a small LNG storage tank or a liquefied hydrogen storage tank.

The present invention may include the vacuum insulated liquefied gas storage tank.

### [Advantageous Effects]

The vacuum insulated liquefied gas storage tank according to the present invention has a triple-layer structure including an inner tank, an outer tank, and a vacuum insulation part, and the vacuum insulation part is vacuum-insulated, so that it may restrict heat transfer between the inside and outside of the storage tank to a minimum.

The effects of the present invention are not limited to the above-described effects, and other effects not described may be obviously understood by those skilled in the art from the claims.

### [Description of Drawings]

FIG. 1 is a front view of a vacuum insulated liquefied gas storage tank according to an embodiment of the present invention.
FIGS. 2A, 2B, and 2C are diagrams illustrating two, three, and four vacuum pipes horizontally disposed, respectively, in the vacuum insulated liquefied gas storage tank according to an embodiment of the present invention.
FIGS. 3A, 3B, and 3C are diagrams illustrating two, three, and four vacuum pipes diagonally disposed, respectively, in the vacuum insulated liquefied gas storage tank according to an embodiment of the present invention.
FIGS. 4A, 4B, and 4C are diagrams illustrating two, three, and four vacuum pipes vertically disposed, respectively, in the vacuum insulated liquefied gas storage tank according to an embodiment of the present invention.
FIG. 5 is a first plan view of the vacuum insulated liquefied gas storage tank according to an embodiment of the present invention.
FIG. 6 is a second plan view of the vacuum insulated liquefied gas storage tank according to an embodiment of the present invention.
FIG. 7 is a cross-sectional view of the vacuum insulated liquefied gas storage tank according to an embodiment of the present invention.
FIG. 8 is a cross-sectional view of the vacuum insulated liquefied gas storage tank according to an embodiment of the present invention.
FIG. 9 is a diagrams illustrating that a vacuum pipe of the vacuum insulated liquefied gas storage tank according to an embodiment of the present invention is fixed to an outer tank.
FIG. 10 is a diagram illustrating a plurality of intake ports and a filter unit formed in the vacuum pipe of the vacuum insulated liquefied gas storage tank according to an embodiment of the present invention.

### [Best Mode]

Hereinafter, when a part is said to "include" a component, this means that it may further include other components rather than excluding other components, unless otherwise specified.

Hereinafter, the present invention will be described in more detail to facilitate understanding of the present invention.

Hereinafter, a liquefied gas storage tank, in which liquefied gas is stored, may be installed on a ship, and the ship may be a liquefied gas carrier.

Hereinafter, liquefied gas may refer to liquefied natural gas, liquefied petroleum gas, ethane, ethanol, methanol, etc., and may refer to any substance that is transported in a liquid state through cooling but has a boiling point lower than room temperature and thus may evaporate into a gaseous state at room temperature. The liquefied gas may refer to, for example, liquefied natural gas or liquefied hydrogen (LH2), and boil-off gas may refer to naturally vaporized liquefied gas, such as boil off gas (BOF). The liquefied gas may be a general term for gaseous gas formed by the forced vaporization of the boil-off gas or the liquid liquefied gas.

Hereinafter, it is to be noted that the term "ship" encompasses not only container ships, merchant ships, and ships capable of producing natural gas at sea, but also all marine structures, including gas platforms and floating objects.

Hereinafter, the terms "horizontal," "diagonal," and "vertical" directions refer to horizontal, diagonal, and vertical directions, respectively, relative to a floor surface where a liquefied gas storage tank 1 is disposed, i.e., a bottom surface on which an outer tank is supported.

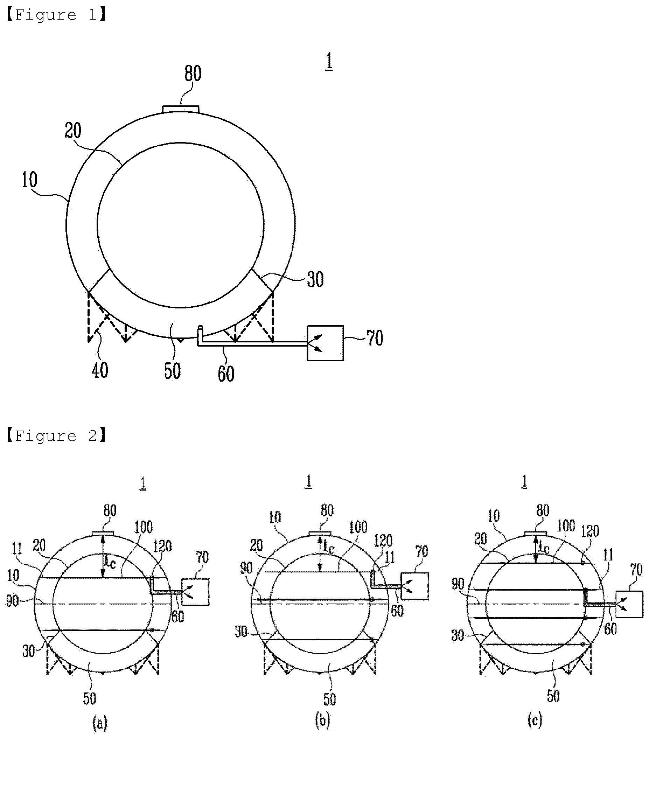

FIG. 1 is a front view of a vacuum insulated liquefied gas storage tank according to an embodiment of the present invention.

Referring to FIG. 1, the vacuum insulated liquefied gas storage tank 1 according to an embodiment of the present invention may include an outer tank 10, an inner tank 20, a support structure 30, a fixed structure 40, a vacuum insulation part 50, a pump pipe 60, a vacuum pump 70, and a dome 80.

The liquefied gas storage tank 1 may store liquefied gases such as liquefied hydrogen (LH2) and liquefied natural gas (LNG), and may include a configuration in which heat transfer to the outside is blocked to maintain the liquefied gas in a cryogenic state. The liquefied gas storage tank 1 is a pressure tank, and may be a tank manufactured to withstand the increase in pressure even when the pressure inside the tank increases due to the boil-off gas (BOG) generated when the liquefied gas stored inside the tank vaporizes.

The liquefied gas storage tank 1 may be a membrane type in which the tank is disposed inside the ship or an independent type that exists independently without being integrated with a hull. Specifically, the liquefied gas storage tank 1 may be a tank of moss type, a cylindrical type, a bi-lobe type, etc. The liquefied gas storage tank 1 is preferably a moss type tank in which a spherical tank is disposed on an upper portion of the hull, a plurality of moss type liquefied gas storage tanks 1 may be disposed along a lengthwise direction of the ship, and an upper end portion of the liquefied gas storage tank 1 may protrude upward from the ship. However, the present invention is not limited by the shape or type of the liquefied gas storage tank 1.

The liquefied gas storage tank 1 has a double structure in which the outer tank 10 surrounds the inner tank 20, and has a support structure 30 that is provided between the outer tank 10 and the inner tank 20 to separate the outer tank 10 and the inner tank 20 and fix the inner tank 20 to the outer tank 10. In addition, the outer tank 10 of the liquefied gas storage tank 1 is provided with a fixed structure 40 that withstands the entire load of the liquefied gas storage tank 1 and fixes the liquefied gas storage tank 1 to an external structure such as the ship.

The outer tank 10 may form the appearance of the liquefied gas storage tank 1, withstand impact transmitted from the outside of the liquefied gas storage tank 1, and share the pressure generated by the liquefied gas stored in the inner tank 20 with the inner tank 20. The outer tank 10 is preferably manufactured of steel materials to withstand stress or loads transmitted from the inside and outside.

The inner tank 20 may be fixed to the outer tank 10 at a predetermined distance from the outer tank 10. The inner tank 20 has a space for storing the liquefied gas formed therein. Since the inner tank 20 comes into direct contact with the liquefied gas, it may be manufactured of a metal with excellent low-temperature properties capable of withstanding the cryogenic temperature of the liquefied gas. Preferably, the inner tank 20 may be manufactured of aluminum (Al), aluminum alloy materials, or stainless steel materials.

The outer tank 10 and the inner tank 20 are preferably spherical or cylindrical in shape so that the stress or load generated by the liquefied gas stored inside the inner tank 20 is evenly distributed and transmitted to the liquefied gas storage tank 1.

A plurality of support structures 30 may be installed between the double structure of the outer tank 10 and the inner tank 20, and in particular, may be installed on a lower side of the liquefied hydrogen storage tank 1 to support the bottom surface of the inner tank 20. The support structure 30 may fix the inner tank 20 to the outer tank 10. Since the support structure 30 is in contact with the inner tank 20, its temperature may drop to the cryogenic temperature. Therefore, the support structure 30 may be manufactured of materials, which may withstand the cryogenic temperature, such as wood, SUS, polytetrafluoroethylene (PTFE), or bakelite.

The support structure 30 may be formed of plurality of layers, and may include a material with low thermal conductivity as it may act as a heat transfer medium between the outer tank 10 and the inner tank 20. The support structure 30 may include an elastic material to prevent cracks or damage when the outer tank 10 and inner tank 20 undergo deformation due to thermal contraction or expansion.

The fixed structure 40 supports the entire load of the liquefied hydrogen storage tank 1 by fixing the liquefied gas storage tank 1 to the external structure such as the ship and supporting the outer tank 10. The fixed structure 40 may have a shape corresponding to the bottom surface of the outer tank 10 so that the liquefied gas storage tank 1 may be seated. For example, when the bottom surface of the outer tank 10 is circular, the fixed structure 40 may have a concave shape capable of supporting the circular outer tank 10.

The fixed structure 40 may be manufactured of a steel material to withstand the load of the liquefied gas storage tank 1, but the present invention is not limited thereto. The fixed structure 40 is preferably manufactured of a metal material with excellent low-temperature properties to prevent the leakage of the liquefied gas. The metal material with excellent low-temperature properties may be any one of stainless steel, aluminum, and an aluminum alloy.

A vacuum insulation part 50 may be provided between the outer tank 10 and the inner tank 20. The vacuum insulation part 50 may be maintained in a vacuum state. The vacuum insulation part 50 may block heat transfer by conduction or convection between the outer tank 10 and the inner tank 20.

The pump pipe 60 and the vacuum pump 70 may be provided at the lower portion of the liquefied gas storage tank 1 to create the vacuum state in the vacuum insulation part 50. The pump pipe 60 may have one end connected to the vacuum insulation part 50 and the other end connected to the vacuum pump 70. When the vacuum pump 70 operates, the vacuum insulation part 50 may be in the vacuum state while the gas contained in the vacuum insulation part 50 is exhausted to the outside.

Also, although not shown in the diagram, a monitoring means may be provided to confirm a vacuum level of the vacuum insulation part 50.

The vacuum insulation part 50 may be filled with an insulating material. The insulating material may be an organic insulating material, such as polypropylene, polyurethane, polystyrene, polyethylene, or polyisocyanurate. In addition, the insulating material may be an inorganic insulating material, such as an aerogel blanket, fumed silica, calcium silicate, mineral wool, glass wool, glass microfiber material, or perlite, and a hybrid material of organic and inorganic insulating materials.

Preferably, the insulating material may be a powder-form insulating material, such as a core material made of perlite or glass bubbles. Examples of the insulating material may include expanded perlite power and hollow glass microspheres.

When the vacuum insulation part 50 is filled with the insulating material, gases between the insulating materials are exhausted, thereby creating the vacuum state in the vacuum insulation part 50. In this case, the vacuum level may be approximately 10-5 to 1 Torr.

An opening may be formed on an upper surface of the liquefied gas storage tank 1. The opening is connected to a dome 80 which may discharge the liquefied gas to the outside of the liquefied gas storage tank 1. Various pipes (not shown) may be provided on the dome 80, and the pipes may extend to the lower side of the liquefied gas storage tank 1 and discharge the liquefied gas to the outside along the pipe via a pump (not shown) submerged in the inner tank. The insulating material may be supplied to the vacuum insulation part 50 through the dome 80.

When the liquefied gas storage tank 1 is large or the vacuum level increases to enhance the insulation performance, it takes longer to create the vacuum in the vacuum insulation part 50, and the labor required for this process also increases. Furthermore, when insulating material is filled to enhance the insulation performance of the vacuum insulation part 50, the effort required to create the vacuum in the vacuum insulation part 50 may increase.

Therefore, the vacuum insulated liquefied gas storage tank 1 of the present invention further includes a vacuum pipe 100, thereby minimizing the time and labor required to create the vacuum in the vacuum insulation part 50. The vacuum pipe 100 will be described in detail below.

FIGS. 2A, 2B, and 2C are diagrams illustrating two, three, and four vacuum pipes horizontally disposed, respectively, in the vacuum insulated liquefied gas storage tank according to an embodiment of the present invention.

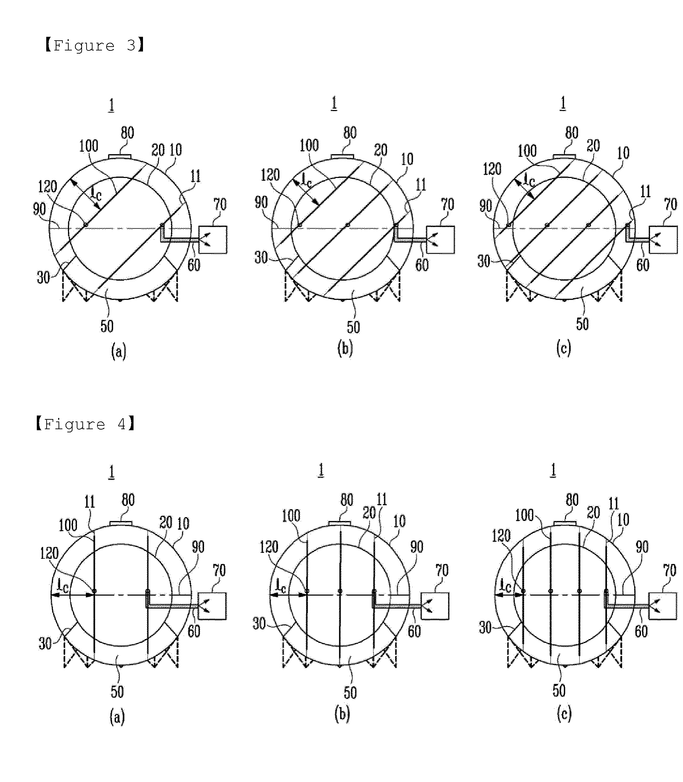

FIGS. 3A, 3B, and 3C are diagrams illustrating two, three, and four vacuum pipes diagonally disposed, respectively, in the vacuum insulated liquefied gas storage tank according to an embodiment of the present invention.

FIGS. 4A, 4B, and 4C are diagrams illustrating two, three, and four vacuum pipes vertically disposed, respectively, in the vacuum insulated liquefied gas storage tank according to an embodiment of the present invention.

Descriptions overlapping with those in FIG. 1 will be omitted below, and additional components will be described in detail.

Referring to FIG. 2, the vacuum insulation part 50 of the liquefied gas storage tank 1 may include one or more vacuum pipes 100.

In FIG. 2, the vacuum pipe 100 appears to be a linear form, but the vacuum pipe 100 surrounds the inner tank 20. Since the vacuum insulation part 50 is filled with the insulating material, the vacuum pipe 100 may be embedded in the insulating material.

An intake port 110 and a plug 120 may be formed on a side surface of the vacuum pipe 100. The intake port 110 may serve as a passage through which the gas between the insulating materials is sucked, and the plug 120 may be connected to the pump pipe 60 and the vacuum pump 70. When the vacuum pump 70 operates, the gas between the insulating materials is sucked into the vacuum pipe 100 through the intake port 110 and discharged to the outside. During this process, the vacuum insulation part 50 may be in the vacuum state.

Referring to FIG. 2, one or more vacuum pipes 100, preferably two or more, may be disposed. FIG. 2A illustrates that two vacuum pipes 100 are disposed, FIG. 2B illustrates that three vacuum pipes 100 are disposed, and FIG. 2C illustrates that four vacuum pipes 100 are disposed. However, the present invention is not limited by the number of vacuum pipes 100 disposed.

The plurality of vacuum pipes 100 may be disposed on the vacuum insulation part 50 to be widely distributed throughout the vacuum insulation part 50. Furthermore, the plurality of intake ports 110 may be formed along the lengthwise direction of the vacuum pipe 100. Accordingly, points far from the intake ports 110 within the vacuum insulation part 50 may be prevented for occurring. Furthermore, the intake port 110 may be formed in various directions on the vacuum pipe 100, allowing suction to occur at various locations surrounding the vacuum pipe 100.

In particular, the vacuum pipe 100 may be disposed at a uniform interval (characteristic length, lc). Accordingly, the exhaust efficiency through the vacuum pipe 100 may increase.

Meanwhile, referring to FIG. 2B, the outer tank 10 and the inner tank 20 may be joined by welding a hemispherical structure. In this case, a central weld line 90 may be formed at a middle portion between the heights of the outer tank 10 and the inner tank 20, but the present invention is not necessarily limited thereto. For example, the central weld line 90 may extend in various directions. When the vacuum pipe 100 is fixed to the outer tank 10 at the same position as the central weld line 90, the structural stability of the liquefied gas storage tank 1 and the fixing force of the vacuum pipe 100 may be reduced. Therefore, it is preferable that the vacuum pipe 100 is fixed to be spaced apart from each other so as not to overlap the central weld line 90.

Referring to FIG. 2, the vacuum pipe 100 may be disposed horizontally. Referring to FIG. 3, the vacuum pipe 100 may be disposed diagonally, and referring to FIG. 4, the vacuum pipe 100 may be disposed vertically.

When the vacuum pipe 100 is disposed diagonally or vertically as illustrated in FIG. 3 or FIG. 4, the plug 120 may be formed at a position adjacent to the central weld line 90, and the plug 120 may be formed near the central weld line 90 (near the deck). The plug 120 may be formed within approximately 10 m in the vertical direction from the central weld line 90, and preferably within 2 m. Accordingly, a worker may easily connect the pump pipe 60 to the plug 120 without using any other tools. That is, when the vacuum pipe 100 is disposed diagonally or vertically, a worker may connect the pump pipe 60 to the vacuum pipe 100 near the deck, thereby improving the worker's work efficiency.

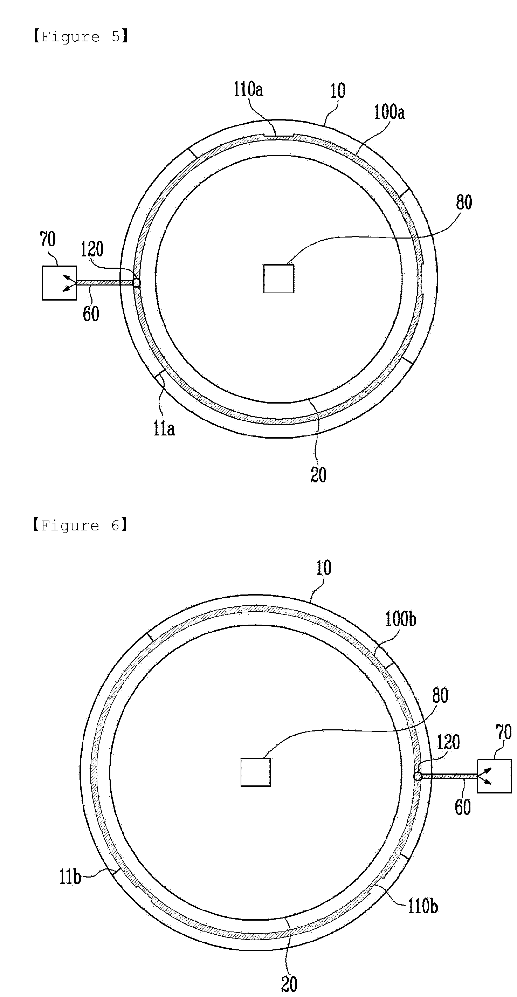

FIG. 5 is a first plan view of the vacuum insulated liquefied gas storage tank according to an embodiment of the present invention.

FIG. 6 is a second plan view of the vacuum insulated liquefied gas storage tank according to an embodiment of the present invention.

FIGS. 5 and 6 each illustrate cross-sections of the liquefied gas storage tank 1 at different heights. Since the outer tank 10 and the inner tank 20 each have a spherical shape, the cross-sections of the outer tank 10 and the inner tank 20 are circular. The circle may have a maximum diameter at the mid-height of the liquefied gas storage tank 1. FIG. 5 illustrates a cross-section whose diameter is smaller than that of FIG. 6, and FIG. 5 illustrates a cross-section at a location further spaced apart from the center (mid-height) of the liquefied gas storage tank 1 compared to FIG. 6.

Referring to FIGS. 5 and 6, the vacuum pipe 100 may be provided on the vacuum insulation part 50 between the outer tank 10 and the inner tank 20. The plurality of vacuum pipes 100 may be provided. For example, as illustrated in FIGS. 5 and 6, the plurality of vacuum pipes 100 may be provided according to a height. In contrast, a plurality of vacuum pipes 100 may also be provided at the same height in the direction from the inner tank 20 to the outer tank 10. However, the present invention is not limited thereto.

The first vacuum pipe 100a may surround the inner tank 20, and the second vacuum pipe 100b may surround the inner tank 20. When the first vacuum pipe 100a and the second vacuum pipe 100b are installed in the height direction or in the direction from the inner tank 20 to the outer tank 10, it is preferable that the first vacuum pipe 100a and the second vacuum pipe 100b are installed at an appropriate distance to achieve the vacuum throughout the liquefied gas storage tank 1.

In addition, the first vacuum pipe 100a and the second vacuum pipe 100b may be spaced apart from the outer tank 10 or the inner tank 20 by the same distance within the vacuum insulation part 50, and the distance at which the first vacuum pipe 100a is spaced apart from the outer tank 10 and the distance at which the first vacuum pipe 100a is spaced apart from the inner tank 20 may be the same or different, and similarly, the distance at which the second vacuum pipe 100b is spaced apart from the outer tank 10 and the distance at which the second vacuum pipe 100b is spaced apart from the inner tank 20 may be the same or different. That is, the first vacuum pipe 100a and the second vacuum pipe 100b may be disposed close to the outer tank 10 or close to the inner tank 20 within the vacuum insulation part 50, respectively.

The first vacuum pipe 100a may be provided with a first intake port 110a and may be fixed to the outer tank 10 by a first connection part 11a. Similarly, the second vacuum pipe 100b may be provided with a second intake port 110b and may be fixed to the outer tank 10 by a second connection part 11b. The first vacuum pipe 100a and the second vacuum pipe 100b are provided with the plug 120, and the pump pipe 60 may be connected to the plug 120, and the gas inside the vacuum insulation part 50 may be sucked in through the first intake port 110a and the second intake port 110b.

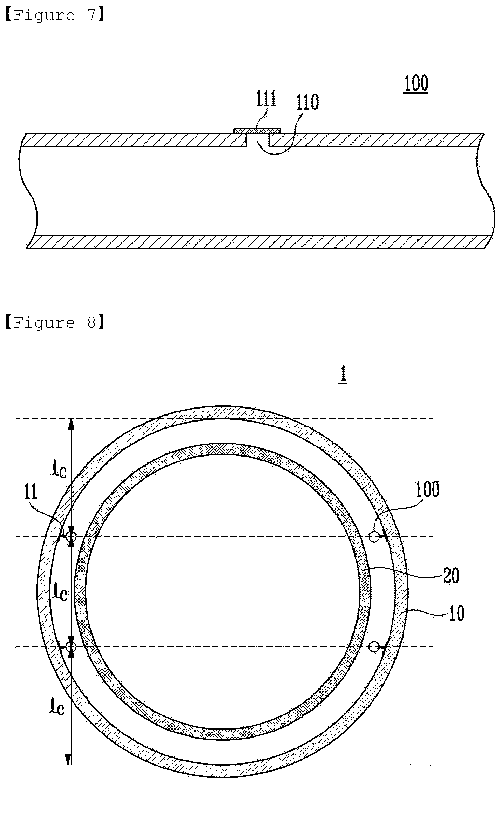

FIG. 7 is a cross-sectional view of the vacuum insulated liquefied gas storage tank according to an embodiment of the present invention.

Referring to FIG. 7, the vacuum pipe 100 may include the intake port 110 formed on the side surface (in the width direction) and a filter unit 111 covering the intake port 110.

The vacuum pipe 100 is connected to the pump pipe 60 via the plug 120. When the vacuum pump 70 operates, the gases inside the vacuum insulation part 50 may be sucked into the vacuum pipe 100 through the intake port 110 and exhausted to the outside.

In this case, since the vacuum insulation part 50 is filled with the insulating material, such as powder, when the vacuum pump 70 operates, the insulating material may be sucked into the intake port 110 and transferred to the vacuum pump 70 along the vacuum pipe 100.

When the insulating material is transferred to the vacuum pump 70 through the intake port 110, the vacuum performance of the vacuum pump 70 deteriorates and may cause fatal damage to the vacuum pump 70. Therefore, to prevent the insulating material from flowing into the vacuum pump 70 while creating the vacuum state in the vacuum insulation part 50 through the intake port 110, the intake port 110 may be covered with the filter unit 111.

The filter unit 111 has a porous structure such as a mesh, and the filter unit 111 may be disposed in a plurality of layers to enhance the insulating material filtering effect. For example, the filter unit 111 may be a metal mesh or a multi-layered filter made of a pulp material.

Holes formed in the filter unit 111 itself or holes formed in the filter unit 111 as the filter unit 111 is stacked in multiple layers may have a diameter smaller than the particle diameter of the insulating material to prevent the insulating material from flowing into the intake port 110. The filter unit 111 may be made of various materials other than the above-described materials and may be manufactured in various sizes or shapes, but the present invention is not limited thereto.

The filter unit 111 may cover only the area where the intake port 110 is formed, or may cover the area where the intake port 110 is formed by surrounding the entire vacuum pipe 100. However, the present invention is not limited thereto.

FIG. 8 is a cross-sectional view of the vacuum insulated liquefied gas storage tank according to an embodiment of the present invention.

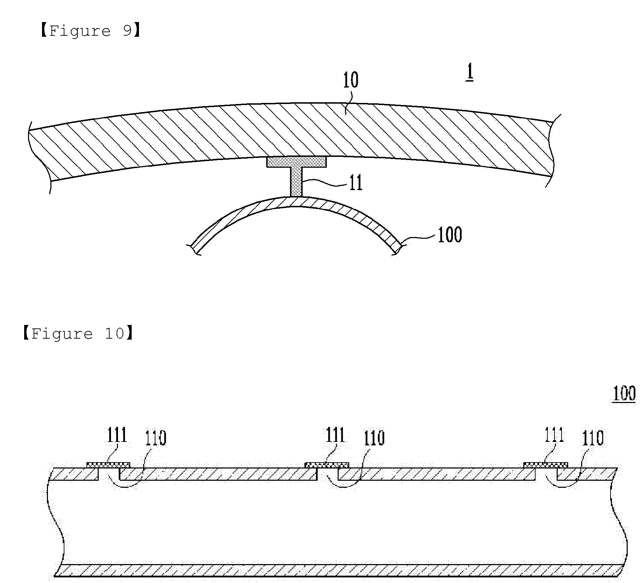

FIG. 9 is a diagrams illustrating that a vacuum pipe of the vacuum insulated liquefied gas storage tank according to an embodiment of the present invention is fixed to an outer tank.

Referring to FIGS. 8 and 9, the vacuum pipe 100 may be fixed to the outer tank 10 by a connection part 11. Since the connection part 11 is provided on the vacuum insulation part 50, the connection part 11 may receive cooling heat from the inner tank 20, so the temperature may drop. Therefore, the connection part 11 may be manufactured of materials, which may withstand the low temperature, such as wood, SUS, polytetrafluoroethylene (PTFE), and bakelite.

However, when the connection part 11 is installed on the central weld line 90 of the outer tank, the structural stability of the liquefied gas storage tank 1 and the fixing force of the vacuum pipe 100 may be degraded. Therefore, it is preferable that the vacuum pipe 100 is installed to be spaced apart from each other so as not to overlap the central weld line 90.

As described above, the vacuum insulated liquefied gas storage tank 1 according to the present invention may reduce the distance from the intake port 110 to each point of the vacuum insulation part 50 by widely distributing the vacuum pipe 100 and the intake port 110 formed in the vacuum pipe 100 across the vacuum insulation part 50, thereby solving the problem in which the exhaust performance decreases as the distance from the intake port 110 increases.

Furthermore, the vacuum pipe 100 is fixed to the outer tank 10 at a distance from the central weld line 90, thereby preventing deterioration in the structural stability of the liquefied gas storage tank 1 and the fixing force of the vacuum pipe 100.

In addition, when the vacuum pipe 100 is disposed diagonally or vertically, the plug 120 of the vacuum pipe 100 is positioned near the deck, making it easier for the worker to connect the pump pipe 60 to the plug 120.

FIG. 10 is a diagram illustrating a plurality of intake ports and a filter unit formed in the vacuum pipe of the vacuum insulated liquefied gas storage tank according to an embodiment of the present invention.

Referring to FIG. 10, the plurality of intake ports 110 may be formed along the lengthwise direction of the vacuum pipe 100. The vacuum pipe 100 may be positioned within the vacuum insulation part 50 and may be provided with the plurality of intake ports 110 formed on the side surface thereof.

The vacuum pipe 100 may suck the gas between the insulating materials in the plurality of areas within the vacuum insulation part 50 through the plurality of intake ports 110. The vacuum pipe 100 may simultaneously suck in the gas from the plurality of areas within the vacuum insulation part 50 through the plurality of intake ports 110.

The plurality of filter units 111 may be disposed within the plurality of intake ports 110.

The present invention is not limited to the embodiments described above, and it goes without saying that the present invention may include, as another embodiment, a combination of the embodiments or a combination of at least one of the embodiments and the known technology.

In the above, although specific embodiments of the present invention have been described in detail for specifically explaining the present invention, it will be obvious to those skilled in the art that the present invention is not limited thereto and that modifications and improvements thereof may be made within the technical idea of the present invention.

The simple modifications and changes of the present invention all fall within the scope of the present invention, and the specific protection scope of the present invention will be apparent by the accompanying claims.

**[Description of symbols]**

| | | | |
|---|---|---|---|
| 1: | Liquefied gas storage tank | 10: | Outer tank |
| 11: | Connection part | | |
| 20: | Inner tank | 30: | Support structure |
| 40: | Fixed structure | 50: | Vacuum insulation part |
| 60: | Pump pipe | 70: | Vacuum pump |
| 80: | Dome | 90: | Central weld line |
| 100: | Vacuum pipe | 110: | Intake port |
| 111: | Filter unit | 120: | Plug |

## Claims

1. A vacuum insulated liquefied gas storage tank, comprising:
an inner tank in which liquefied gas is stored;
an outer tank which is spaced apart from the inner tank and surrounds the inner tank;
a vacuum insulation part which is formed between the outer tank and the inner tank and is filled with an insulating material to block heat transfer between the outer tank and the inner tank; and
a vacuum pipe which is disposed within the vacuum insulation part and has an intake port formed on a side surface thereof,
wherein the intake port is formed in a plural number along a lengthwise direction of the vacuum pipe.

2. The vacuum insulated liquefied gas storage tank of claim 1, wherein the vacuum pipe sucks gas between the insulating materials filled in the vacuum insulation part into the vacuum pipe through the intake port.

3. The vacuum insulated liquefied gas storage tank of claim 2, further comprising:
a filter unit which covers the intake port to prevent the insulating material from being discharged to an outside.

4. The vacuum insulated liquefied gas storage tank of claim 1, wherein the vacuum pipe is fixed to the outer tank and surrounds the inner tank.

5. The vacuum insulated liquefied gas storage tank of claim 1, wherein the vacuum pipe is fixed at a position spaced apart from a central weld line formed by welding a structure constituting the outer tank or the inner tank.

6. The vacuum insulated liquefied gas storage tank of claim 1, wherein at least two vacuum pipes are provided in the vacuum insulation part.

7. The vacuum insulated liquefied gas storage tank of claim 1, wherein the insulating material includes at least one of polypropylene, polyurethane, polystyrene, polyethylene, polyisocyanurate, aerogel blanket, fumed silica, calcium silicate, mineral wool, glass wool, glass microfiber, perlite, and glass bubbles.

8. The vacuum insulated liquefied gas storage tank of claim 1, further comprising:
a connection part which fixes the vacuum pipe to the outer tank.

9. The vacuum insulated liquefied gas storage tank of claim 8, wherein the connection part is installed to be spaced apart from a central weld line formed by welding a structure constituting the outer tank or the inner tank.

10. The vacuum insulated liquefied gas storage tank of claim 1, further comprising:
a support structure that is provided between the inner tank and the outer tank to fix the inner tank to the outer tank.

11. The vacuum insulated liquefied gas storage tank of claim 1, wherein the vacuum insulated liquefied gas storage tank is a small LNG storage tank or a liquefied hydrogen storage tank.

12. A ship comprising the vacuum insulated liquefied gas storage tank of any one of claims 1 to 11.
